# EUROPEAN PATENT SPECIFICATION

(11) **EP 2 668 022 B1**
(45) Date of publication and mention of the grant of the patent: **18.12.2019**
(21) Application number: 12708727.8
(22) Date of filing: 25.01.2012
(51) Int. Cl.: B29C 70/08, B29C 70/12, B29C 70/50, B29C 70/18, B32B 27/04, B32B 27/12, B32B 5/26, B32B 5/06, B32B 5/14, B32B 5/28, B32B 27/32, B32B 27/34, B32B 27/36, B32B 38/08, B32B 5/02

(54) **FLEXURALLY RIGID LAMINATED SHEETS, PARTS MOLDED THEREFROM AND METHOD OF FABRICATION**
FLEXURSTEIFE BESCHICHTETE FOLIEN, DARAUS GEFORMTE TEILE SOWIE VERFAHREN ZU IHRER HERSTELLUNG
NAPPES STRATIFIÉES RIGIDES EN FLEXION, PIÈCES MOULÉES À PARTIR DE CELLES-CI ET PROCÉDÉ DE FABRICATION

(30) Priority: 25.01.2011 JP 2011013164
(43) Date of publication of application: 04.12.2013
(73) Proprietor: Quadrant Plastic Composites Japan Ltd, Yokkaichi-shi, Mie-ken 510-0051 (JP)
(72) Inventor: SAKAI, Hiroshi, Yokkaichi-shi Mie-ken 510-0051 (JP); KITA, Hijiri, Yokkaichi-shi Mie-ken 510-0051 (JP); BRENTRUP, Karl-Ludwig, CH-5103 Möriken (CH)
(74) Representative: Schmauder & Partner AG Patent- & Markenanwälte VSP
(86) International application number: PCT/EP2012/051175
(87) International publication number: WO 2012/101192

(56) References cited:
- WO-A2-01/16214
- DE-A1- 10 114 553
- DE-A1- 19 520 477
- US-A- 6 068 715

## Description

### Technical field

The present invention generally relates to methods for producing flexurally rigid laminated sheets and flexurally rigid molded parts as well as to laminated sheets and molded parts obtained therefrom.

### Background art

Fiber mats having increased flexure strength by virtue of being impregnated with thermoplastic resins are generally known, e.g. from JP 2003-080519 (A). However, because glass fibers are exposed on the outer surfaces of such fiber mats, the latter are harsh to the touch. Applying a nonwoven cloth on the outer side of such fiber mats leads to a smooth feel and to a nice appearance. However, there is the problem that the applied nonwoven cloth is easy to peel off from the outer side of the fiber mat. The same disadvantages occur with molded parts made therefrom.

DE 19520477 A1 discloses a thermally expanded fiber reinforced thermoplastic sheet and a method for making the same. The latter method starts with a fiber reinforced thermoplastic sheet which is introduced into a double-belt press where it is heated up under pressure; the pressure is then released, thereby allowing the sheet to expand and cool down outside of the press. Optionally a cover layer is applied to the expanded part in a subsequent heating step while conserving the core in its expanded state. The laminated expanded sheet may be formed to a product by means of a subsequent molding step.

### Summary of the invention

It is an object of the present invention to provide improved laminated sheets and molded parts having a main body including fiber mats and at least one surface sheet such as a non-woven cloth for a smooth feel and nice appearance. In particular, the improvement shall result in a better non-detachability of such surface sheets by increasing the adhesive strength of the surface sheet against the outer side of the main body.

The above and further objects are achieved with the method defined in claim 1, with the molded part defined in claim 7 and with the laminated sheet defined in claim 13.

According to one aspect of the invention, there is provided a method for producing a flexurally rigid consolidated laminated sheet, comprising the following steps:
a) providing a nonwoven fiber mat comprising reinforcing fibers;
b) subjecting said nonwoven fiber mat to a needling process, thereby obtaining a needled nonwoven fiber mat;
c) providing at least one thermoplastic resin sheet and at least one surface sheet, said surface sheet being formed of a non-woven cloth comprising cloth fibers, and arranging said surface sheet and said resin sheet to be substantially co-planar to said needled non-woven fiber mat, thereby obtaining a multilayered sheet, with the provision that said thermoplastic resin has a first softening temperature T1 that is lower than both a second softening temperature T2 of said cloth fibers and a third softening temperature T3 of said reinforcing fibers;
d) subjecting said multilayered sheet to a heating and pressure treatment, thereby melting said thermoplastic resin sheet so as to form a fully impregnated laminated sheet;
e) subjecting said fully impregnated laminated sheet to a cooling and pressure treatment, thereby solidifying said melted thermoplastic resin, so as to form a consolidated laminated sheet with a porosity not exceeding 5% by volume.
wherein at least steps c) to e) are carried out as a continuous process. This method allows production of a convenient semi-finished product as explained further below.

According to an advantageous embodiment, the above defined method is followed by the steps of:
f) providing a portion of said consolidated laminated sheet and heating the same to a temperature above said first softening temperature T1 but below said second softening temperature T2 and said third softening temperature T3, thereby melting thermoplastic resin contained in said laminated sheet portion, whereby said main body increases in thickness due to a springback action of reinforcing fibers contained therein, thereby forming a porous laminated sheet;
g) subjecting said porous laminated sheet to a hot molding process, thereby forming a hot molded part;
h) allowing said hot molded part to cool down, thereby forming a flexurally rigid molded part.

In the present context, the term "molded part" shall be used interchangeably with the term "compact", as generally known in the field of fiber reinforced thermoplastics.

In particular, steps d) and e) can be carried out in a double band press.

In order to carry out the above process without disrupting the fibrous structures forming the mat of reinforcing fibers and the surfaces sheet, respectively, the softening temperature T1 of the thermoplastic resin must be lower than any softening temperatures T2 and T3 of the cloth fibers and reinforcing fibers, respectively. It will be understood that if any fiber material were to have a decomposition temperature Tc that is even lower than T2 or T3, it would be necessary to select a thermoplastic resin with a T1 smaller than Tc.

It will also be understood that a hot molding process, for example in a metal mold, will subject the laminated sheet contained therein to be formed into a shape defined by the distance between molding tools. That distance can be variable across the tool, so as to form local depressions and/or protruding areas in accordance with the final product to be manufactured (i.e. the compact or molded part).

It is important to note that the above defined steps e) and f) will generally be carried out at different locations and at arbitrarily different times. In particular, it is contemplated that one manufacturer will produce consolidated laminated sheets with low porosity, which basically represent a so-called "semi-finished" product. The semi-finished product can be temporarily stored and is eventually transported to another manufacturer who will carry out the molding steps f) to h) to form the final product. In this respect, it is advantageous that the semi-finished product has minimum porosity and thus minimum volume, which allows for more efficient transportation.

Just to give an informative example, a typical fully consolidated laminated sheet obtained at the end of step e) may have a thickness of 1.5 mm whereas step f) will lead to a porous sheet with a thickness of 5 mm. In the subsequent molding process g) the laminated sheet may be compressed back to typically 3 mm or, as the case may be, all the way to fully consolidated conditions with 1.5 mm thickness.

According to a further aspect, there is provided a flexurally rigid molded part produced by the above defined method, the molded part comprising:
- a core layer made of at least one needled nonwoven fiber material comprising reinforcing fibers;
- at least one surface layer attached in substantially co-planar manner to one face of said core layer, said surface layer being formed of a non-woven cloth comprising cloth fibers;
- wherein gaps within and between said core layer and said surface layer are impregnated with a thermoplastic resin having a first softening temperature T1 that is lower than both a second softening temperature T2 of said cloth fibers and a third softening temperature T3 of said reinforcing fibers, whereby said surface layer is firmly attached to said core layer.
said molded part having a reinforcing fiber content of 10 to 50% by weight.

According to yet another aspect, there is provided a flexurally rigid consolidated laminated sheet produced by the above defined method, the laminated sheet comprising:
- a main body made of at least one needled nonwoven fiber mat comprising reinforcing fibers;
- at least one surface sheet attached in substantially co-planar manner to one face of said main body, said surface sheet being formed of a non-woven cloth comprising cloth fibers;
- wherein gaps within and between said main body and said surface sheet are impregnated with a thermoplastic resin having a first softening temperature T1 that is lower than both a second softening temperature T2 of said cloth fibers and a third softening temperature T3 of said reinforcing fibers, whereby said surface sheet is firmly attached to said main body,
said laminated sheet having an area weight of 300 to 6'500 g/m², a reinforcing fiber content of 10 to 50% by weight and a porosity not exceeding 5% by volume.

In particular, the above defined consolidated laminated sheet can be used to carry out the above defined method of producing a flexurally rigid molded part.

Advantageous embodiments are defined in the dependent claims.

The needled nonwoven fiber material of the above mentioned core layer or main body, respectively, preferably comprises reinforcing fibers having an average length by weight of 25 to 100 mm, or even continuous fibers, that are uniformly distributed in the core layer or main body, respectively, and are present as individual filaments to an extent of 50% or more.

In one embodiment, the hot molding process comprises forming at least one compacted region with comparatively smaller thickness and at least one expanded region with comparatively larger thickness. Advantageously, this is accomplished by the specific profile of the mold tools. Here the term "comparatively" refers to a comparison between compacted region and expanded region. Typically, such compacted regions are used to provide structural stability whereas the expanded regions are used to provide thermal and/or acoustic insulation. In one embodiment, such an expanded region has a porosity of about 35 to about 65% by volume, whereas the compacted region will have a comparatively lower porosity which may be as low as 5% by volume or even less.

The reinforcing fibers can be of any known and suitable type, such as glass fibers, carbon fibers, aramid fibers, basalt fibers, plastic fibers, natural fibers, metal fibers, pulp fibers or any mixtures thereof. The nonwoven mat of reinforcing fibers can be configured as textile fabric or knitting other than a nonwoven cloth. Advantageously, the reinforcing fibers are selected from glass fibers and carbon fibers or a mixture thereof. These fibers have excellent mechanical and thermal stability, thus allowing to select the thermoplastic resin from a wide range.

The surface sheet can be composed of nonwoven cloths of glass fibers, carbon fibers, natural fibers, metal fibers, pulp fibers etc. other than a nonwoven cloth of plastic fibers, and can be composed of textile fabrics or knitting other than a nonwoven cloth. It can also be made from polymer fibers, for example, polypropylene, polyester, polyethylene, nylon, vinylon, rayon, acryl, aramid, polylactic acid, polyethylene terephthalate (PET), provided that the resin fibers have a softening temperature T2 that is higher than the softening temperature T1 of the thermoplastic resin.

In a particularly advantageous embodiment, the cloth fibers of the surface sheet are polyethylene terephthalate (PET) fibers. This was found to give excellent acoustic properties, for example for automotive parts. Moreover, the surface formed with such material is pleasant to the touch. Preferably, the amount of PET fibers is 5 to 50% by weight, particularly about 35 to 45% by weight in relation to the entire semifinished product.

According to a further advantageous embodiment, the thermoplastic resin is polypropylene. This allows carrying out the heating and pressure step d) at moderate temperatures around 200ºC.

In a particularly advantageous embodiment, the laminated sheet has an area weight of 300 to 2'500 g/m², particularly of 500 to 1'800 g/m².

According to a further embodiment, at least one of the surface sheets is provided with a decorative print.

As will be explained further below, the main body of the laminated sheet, which will become the core layer of the compact produced by molding, can consist of a single fiber mat. In other embodiments, however, the main body comprises two or even more fiber mats arranged adjacent to each other. In some embodiments such fiber mats are arranged in sandwich manner with a thermoplastic resin sheet therebetween. It is also possible to have a plurality of fiber mats comprising groups of fiber mats with different properties. A similar multitude applies for the number and arrangement of surface sheets and thermoplastic resin sheets, which can be one-sided, two-sided, dual resin sheet, and so forth.

### Brief description of the drawings

The above mentioned and other features and objects of this invention and the manner of achieving them will become more apparent and this invention itself will be better understood by reference to the following description of various embodiments of this invention taken in conjunction with the accompanying drawings, wherein:
- Figure 1: (a) is a side view which schematically shows an equipment producing a fiber mat according to embodiment No. 1; (b) is a side view which schematically shows an equipment producing a laminated sheet according to embodiment No. 1;
- Figure 2: (a) is a cross-section view which schematically shows the first stage sheet in a manufacturing process of a laminated sheet of embodiment No. 1; (b) is a cross-section view which schematically shows the second stage sheet; (c) is a cross-section view which schematically shows the third stage sheet; (d) is a cross-section view which schematically shows the fourth stage sheet;
- Figure 3: (a) is a diagrammatic perspective view which schematically shows a compact comprising a fifth stage sheet obtained by processing a laminated sheet of embodiment No. 1; (b) is a cross-section view of a part of the compact shown in Figure 3(a);
- Figure 4: (a) is a cross-section view which schematically shows the first stage sheet of embodiment No. 1; (b) is a cross-section view which schematically shows the first stage sheet of embodiment No. 2; (c) is a cross-section view which schematically shows the first stage sheet of embodiment No. 3; (d) is a cross-section view which schematically shows the first stage sheet of embodiment No. 4; (e) is a cross-section view which schematically shows the first stage sheet of embodiment No. 5; (f) is a cross-section view which schematically shows the first stage sheet of embodiment No. 6;
- Figure 5: (a) is a cross-section view which schematically shows the first stage sheet of embodiment No. 7; (b) is a cross-section view which schematically shows the first stage sheet of embodiment No. 8; (c) is a cross-section view which schematically shows the first stage sheet of embodiment No. 9; (d) is a cross-section view which schematically shows the first stage sheet of embodiment No. 10; (e) is a cross-section view which schematically shows the first stage sheet of embodiment No. 11; (f) is a cross-section view which schematically shows the first stage sheet of embodiment No. 12;
- Figure 6: (a) is a cross-section view which schematically shows the first stage sheet of embodiment No. 13; (b) is a cross-section view which schematically shows the first stage sheet of embodiment No. 14;
- Figure 7: (a) is a cross-section view which schematically shows the second and third stage sheets of No. 1, 3, 5 and 6 embodiments; (b) is a cross-section view which schematically shows the fourth stage sheet of embodiments No. 1, 3, 5 and 6;
- Figure 8: (a) is a cross-section view which schematically shows the second and third stage sheets of No. 2 and 4 embodiments; (b) is a cross-section view which schematically shows the fourth stage sheet of embodiments No. 2 and 4;
- Figure 9: (a) is a cross-section view which schematically shows the second and third stage sheets of No. 7, 9, 11 and 12 embodiments; (b) is a cross-section view which schematically shows the fourth stage sheet of No. 7, 9, 11 and 12 embodiments;
- Figure 10: (a) is a cross-section view which schematically shows the second and third stage sheets of No. 8 and 10 embodiments; (b) is a cross-section view which schematically shows the fourth stage sheet of No. 8 and 10 embodiments;
- Figure 11: (a) is a cross-section view which schematically shows the second and third stage sheets of embodiment No. 13; (b) is a cross-section view which schematically shows the fourth stage sheet of embodiment No. 13;
- Figure 12: (a) is a cross-section view which schematically shows the second and third stage sheets of embodiment No. 14; and (b) is a cross-section view which schematically shows the fourth stage sheet of embodiment No. 14.

### Detailed description of the invention

In the enclosed figures, reference numerals shown in parentheses denote semi-finished or finished parts made of certain layers, with the latter denoted by reference numerals without parentheses.

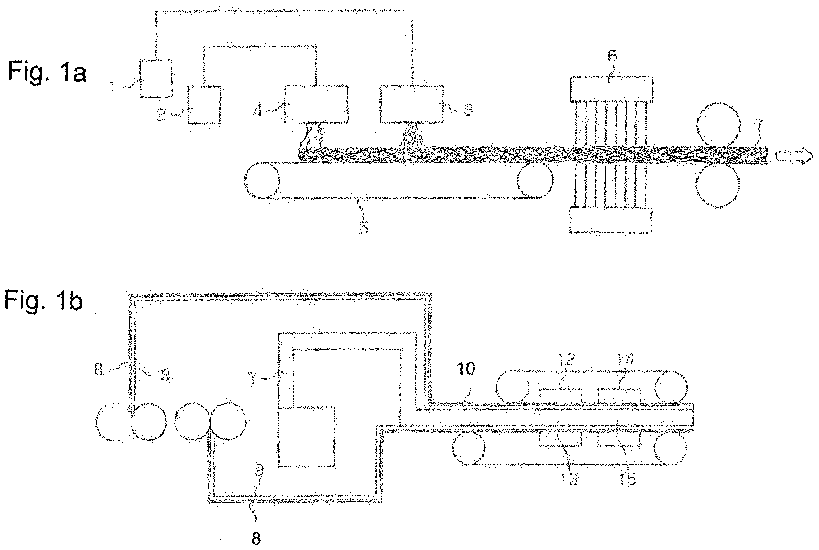

To begin, embodiment No. 1 of the invention is explained by referring to Figures 1 to 3. As Figure 1 (a) shows, glass fibers extracted from a chopped glass fiber container 1 and a continuous glass fiber container 2 are fed as chopped glass fibers from a chopped type feeding device 3 and as continuous glass fibers from a continuous type feeding device 4 onto a net conveyor 5. Subsequently, they are subjected to two-sided needle punching in a needle punching apparatus 6 and are carried out as fiber mats of nonwoven cloth 7. In other embodiments not shown here, only chopped glass fiber or only continuous glass fibers are used.

In the present embodiment as well as in any other emobodiments, the fiber mats of the nonwoven cloth can be composed of glass fibers only (inorganic fibers), or they can be composed of carbon fibers, aramid fibers, basalt fibers, plastic fibers, natural fibers, metal fibers, pulp fibers etc. other than glass fibers or mixtures thereof, and they can be configured as textile fabrics or knittings other than a nonwoven cloth. In a general context, such fibers will also be called "reinforcing fibers".

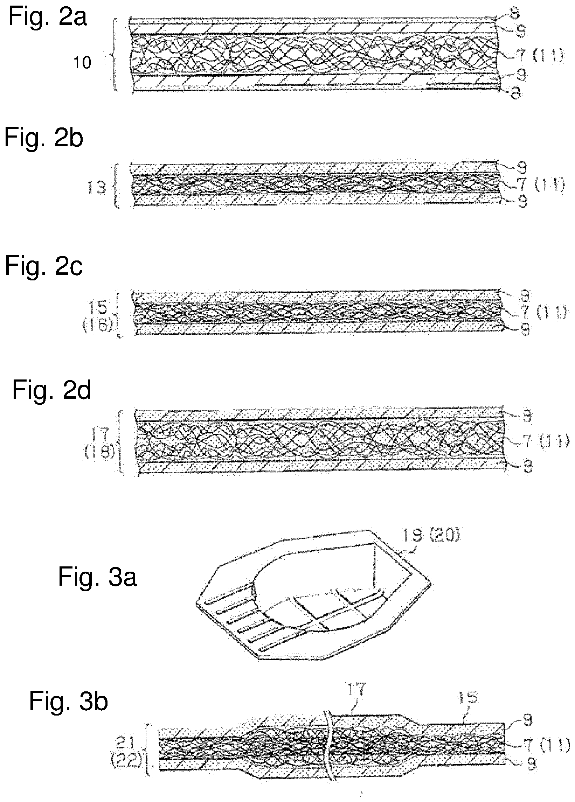

As the Figure 1 (b) shows, a pair of surface sheets of nonwoven cloth 9 and the above described fiber mat 7 are combined to form the first stage sheet 10 which the Figure 2 (a) shows. In this embodiment, each surface sheet 9 is provided at the side thereof facing away from the fiber mat 7 with a respective thermoplastic resin sheet 8. Accordingly, the fiber mat 7 is between surface sheets 9 and one thermoplastic resin sheet 8 is provided on each outer side of surface sheets 9, so that the fiber mat 7 and surface sheets 9 are between thermoplastic resin sheets 8. The thermoplastic resin sheet has a first softening temperature T1.

The first stage sheet 10 is then subjected to heating and pressure treatment when passing through a heating pressure zone 12, as the Figure 2 (b) shows. This causes the thermoplastic resin sheets 8 to melt and leads to formation of the second stage sheet 13, wherein substantially each gap of the fiber mat 7 and the surface sheets 9 is impregnated with thermoplastic resin.

Thereafter the second stage sheet 13 is subjected to a cooling treatment when passing through a cooling pressure zone 14, as the Figure 2 (c) shows. Thereby thermoplastic resin becomes solidified in each gap of the fiber mat 7 and surface sheets 9. This leads to formation of a fully consolidated laminated sheet 16, i.e. to a third stage sheet 15 wherein both surface sheets 9 are firmly attached to the respective outer sides of fiber mat 7. In the third stage sheet 15 the fiber mat 7 is thinner than the fiber mat 7 of the first stage sheet 10 shown in Figure 2 (a).

In the present embodiment as well as in any other emobodiments, any surface sheet 9 can be composed of nonwoven cloths of glass fibers, carbon fibers, natural fibers, metal fibers, pulp fibers etc. other than a nonwoven cloth of plastic fibers, and can be composed of textile fabrics or knitting other than a nonwoven cloth. It can also be made from polymer fibers, for example, polypropylene, polyester, polyethylene, nylon, vinylon, rayon, acryl, aramid, polylactic acid, polyethylene terephthalate (PET), provided that the resin fibers have a second softening temperature T2 that is higher than the first softening temperature T1 of the thermoplastic resin sheet 8. This is to ensure that the form of a surface sheet 9 can be kept even if the thermoplastic resin sheet 8 melts and each gap of the fiber mat 7 and a surface sheet 9 is impregnated with thermoplastic resin. For this purpose, the thermoplastic resin sheet 8 is molded by a resins selected from, for example, polypropylene, polyethylene, polyamide, polyester etc.

When subjecting a laminated sheet 16 of the third stage sheet 15 to a heating treatment, as the Figure 2 (d) shows, thermoplastic resin solidified in each gap of the fiber mat 7 and the surface sheet 9 melts, whereby fiber mat 7 re-expands by springback of the reinforcing fibers contained therein. By this springback or "'" effect, the porosity of the fiber mat 7 increases and becomes larger than the porosity of the surface sheets 9. After that, the thermoplastic resin is allowed to solidify by natural cooling in each gap of the fiber mat 7 and the surface sheet 9. This results in a laminated sheet 18 formed by a fourth stage sheet 17. The fourth stage sheet 17 is thicker than the third stage sheet 15, for example more than twice as thick.

As the Figure 3 (a) shows, when a laminated sheet 16 or 18, which are formed by a third stage sheet 15 or a fourth stage sheet 17, respectively, are molded by setting in a metal mold, they become a compact 20 formed of a fifth stage sheet 19. As the Figure 3 (b) shows, by setting a laminated sheet 18 formed by a fourth stage sheet 17 in a metal mold and subjecting only one part of the laminated sheet 18, for example the whole peripheral lines thereof, to a heating and pressure treatment, it becomes a compact 22 formed by a sixth stage sheet 21. Therein, the fully or partially consolidated third stage sheet 15 forms a marginal plate of the compact whereas the lofted or weakly consolidated fourth stage sheet 17 forms the inner part of the compact.

Furthermore, decorativeness of the laminated sheets 16, 18 and compacts 20, 22 can be improved by applying a color or a pattern on surface sheet 9.

In the following, embodiments No. 2 to 16 embodiments will be explained mainly by pointing out the differences from embodiment No. 1.

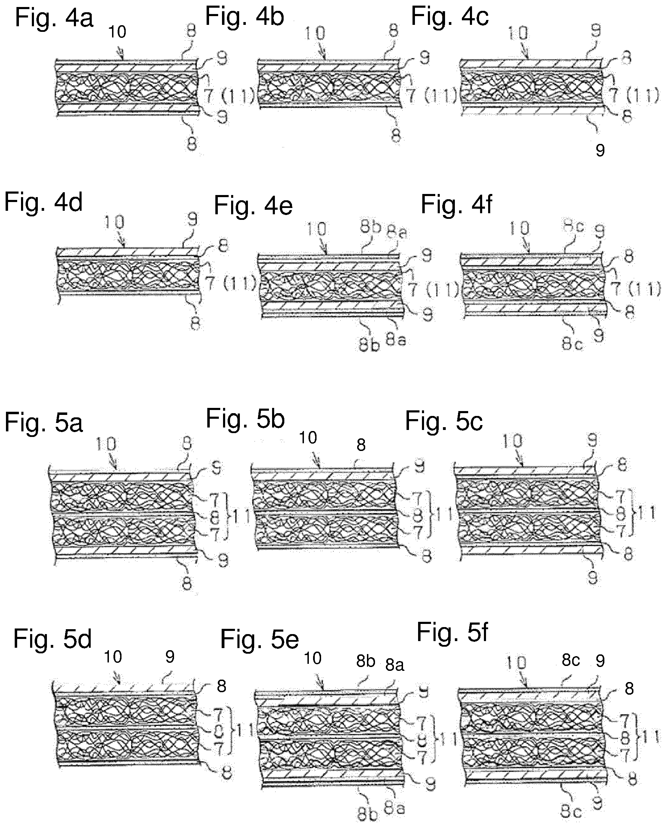

Regarding the first stage sheet 10 of embodiment No. 2 shown by the Figure 4(b), the bottom one of surface sheets 9 formed by first stage sheets 10 of embodiment No. 1 as shown in Figure 2 (a) and identical Figure 4 (a) is omitted. Regarding the first stage sheet 10 of embodiment No. 3 shown by the Figure 4(c), one piece each of thermoplastic resin sheet 8 is put on the upper and bottom sides of a piece of fiber mat 7 (main body 11), so that the fiber mat 7 is arranged between a pair of thermoplastic resin sheets 8. Furthermore, one piece each of a surface sheet 9 is put on the upper and bottom thermoplastic resin sheets 8, so that the fiber mat 7 and the thermoplastic resin sheets 8 are arranged between a pair of surface sheets 9.

Regarding the first stage sheet 10 of embodiment No. 4 shown by the Figure 4(d), the bottom one of surface sheets 9 of the first stage sheet 10 of embodiment No. 3 shown by the Figure 4 (c) is omitted.

Regarding the first stage sheet 10 of embodiment No. 5 shown by the Figure 4(e), the thermoplastic resin sheets 8 of the first stage sheet 10 of embodiment No. 1 shown in Figure 2 (a) and Figure 4 (a) actually consist of two pieces of thermoplastic resin sheets 8a, 8b which are arranged on top of each other. The qualities of the two thermoplastic resin sheets 8a and 8b differ from one another. For example, thermoplastic resin sheet 8a is molded by a resin selected from polypropylene, polyethylene, polyamide, polyester etc. On the other hand, thermoplastic resin sheet 8b is molded by a resin selected from polypropylene, polyethylene, polyamide, polyester, polycarbonate, polyvinyl chloride, polystyrene, ABS resin etc.

Regarding the first stage sheet 10 of embodiment No. 6 shown by the Figure 4(f), one piece each of thermoplastic resin sheet 8c (thermoplastic resin film) is put on the outer side of each surface sheet 9 corresponding to the first stage sheet 10 of embodiment No. 3 shown by the Figure 4 (c). For example, the thermoplastic resin sheet 8c (thermoplastic resin film) is molded by a resin selected from polypropylene, polyethylene, polyamide, polyester, polycarbonate, polyvinyl chloride, polystyrene, ABS resin etc. Accordingly, each surface sheet 9 is enclosed between two thermoplastic resin sheets 8 and 8c, respectively.

Regarding the first stage sheet 10 of embodiment No. 7 shown by the Figure 5(a), a main body 11 which is the first stage sheet 10 of embodiment No. 1 shown by Figure 2 (a) and Figure 4 (a) actually comprises a sandwich formed of two pieces of fiber mats 7 and one piece of a thermoplastic resin sheet 8 between them.

Regarding the first stage sheet 10 of embodiment No. 8 shown by the Figure 5(b), one of surface sheets 9 which is the first stage sheet 10 of embodiment No. 7 shown by the Figure 5 (a) is omitted.

Regarding the first stage sheet 10 of embodiment No. 9 shown by the Figure 5(c), one piece each of a thermoplastic resin sheet 8 is put on the upper and bottom sides of a fiber mat 7 of a sandwich type main body 11, which is the first stage sheet 10 of embodiment No. 7 shown by the Figure 5 (a), so that the main body 11 is between a pair of thermoplastic resin sheets 8. Furthermore, one piece each of surface sheet 9 is put on the upper and bottom side of thermoplastic resin sheets 8, so that the fiber mats 7 of sandwich-type main body 11 and the thermoplastic resin sheets 8 are arranged between surface sheets 9.

Regarding the first stage sheet 10 of embodiment No. 10 shown by the Figure 5(d), one of surface sheets 9 which is the first stage sheet 10 of embodiment No. 9 shown by the Figure 5 (c) is omitted.

Regarding the first stage sheet 10 of embodiment No. 11 shown by the Figure 5(e), the outer thermoplastic resin sheets 8 of the first stage sheet 10 of embodiment No. 7 shown by the Figure 5 (a) actually consist of two pieces of thermoplastic resin sheets 8a, 8b which are arranged on top of each other. The qualities of two thermoplastic resin sheets 8a and 8b differ from one another.

Regarding the first stage sheet 10 of embodiment No. 12 shown by the Figure 5(f), one thermoplastic resin sheet 8c (thermoplastic resin films) each is put on the outer side of each surface sheet 9.

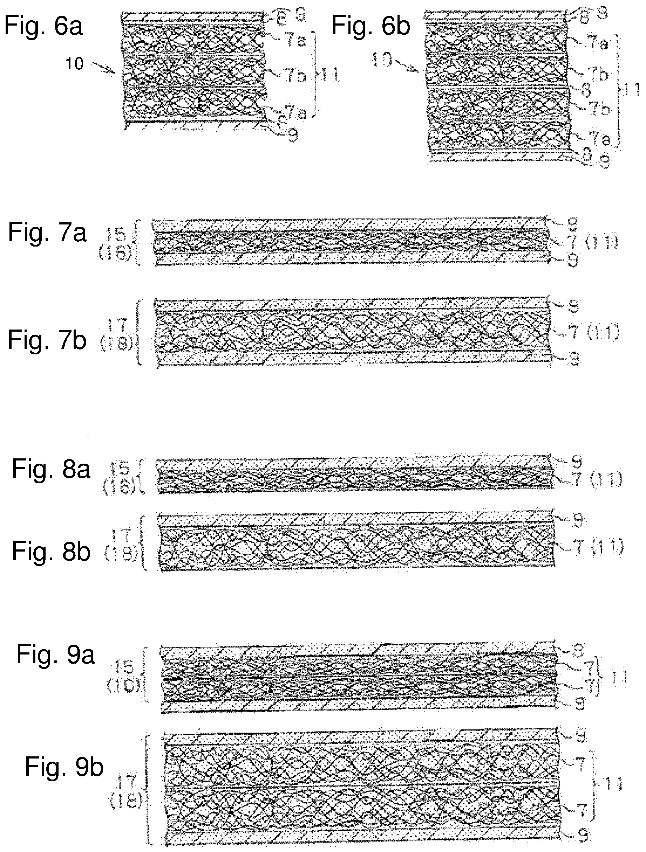

Regarding the first stage sheet 10 of embodiment No. 13 shown by the Figure 6(a), a main body 11 corresponding to the first stage sheet 10 of embodiment No. 9 shown by the Figure 5 (c) actually consists of three pieces of fiber mats 7a, 7b, 7a which are stacked on top of each other. The qualities of both fiber mats 7a and a fiber mat 7b arranged between fiber mats 7a differ from one another. For example, a fiber mat 7b between fiber mats 7a is a nonwoven cloth which consists of chopped glass fibers or continuous glass fibers in the same way as embodiment No. 1. In contrast, fiber mats 7a are made of mixed fibers comprising other reinforcing fibers than glass fibers, for example, textile fabrics etc.

Regarding the first stage sheet 10 of embodiment No. 14 shown by the Figure 6(b), a main body 11 corresponding to the first stage sheet 10 of embodiment No. 9 shown by the Figure 5 (c) actually consists of two pairs of fiber mats, each pair comprising two pieces of fiber mats 7a, 7b put on top of each other as a set. The sequence of mats is 7a, 7b, 7b, 7a with a piece of thermoplastic resin sheet 8 placed between the adjacent sides 7b of the two mat pairs. In each pair of fiber mats 7a, 7b, the qualities of the first fiber mat 7a and the other fiber mat 7b differ from each another.

The third stage sheet 15 (a consolidated laminated sheet 16) of embodiments No. 3, 5, 6 shown by the Figure 7 (a) is the same as the third stage sheet 15 (a consolidated laminated sheet 16) of embodiment No. 1 shown by Figure 2 (b) and Figure 7 (a). The fourth stage sheet 17 (a lofted laminated sheet 18) of embodiments No. 3, 5, 6 shown by the Figure 7 (b) is the same as the fourth stage sheet 17 (a lofted laminated sheet 18) of embodiment No. 1 shown by Figure 2(c) and Figure 7 (b).

Regarding the third stage sheet 15 (a consolidated laminated sheet 16) of embodiments No. 2, 4 shown by the Figure 8 (a) and the fourth stage sheet 17 (a lofted laminated sheet 18) of embodiments No. 2, 4 shown by the Figure 8 (b), there is only one piece of surface sheet 9, which is arranged on the upper side of main body 11 (one piece of fiber mat 7).

Regarding the third stage sheet 15 (a consolidated laminated sheet 16) of embodiments No. 7, 9, 11, 12 shown by the Figure 9 (a) and the fourth stage sheet 17 (a lofted laminated sheet 18) of embodiments No. 7, 9, 11, 12 shown by the Figure 9 (b), one piece each of surface sheet 9 are arranged on the upper and bottom sides of main body 11 (two pieces of fiber mats 7).

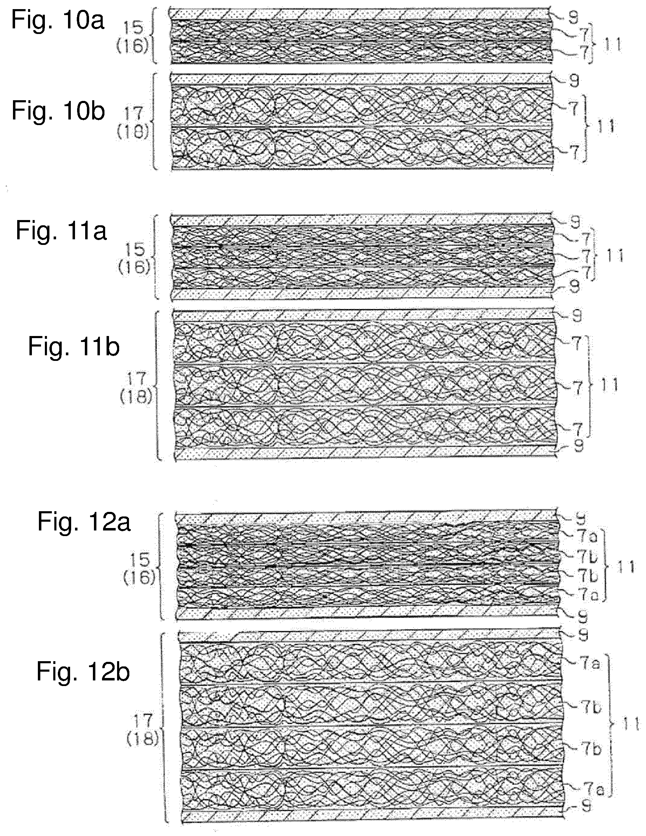

Regarding the third stage sheet 15 (a consolidated laminated sheet 16) of embodiments No. 8, 10 shown by the Figure 10 (a) and the fourth stage sheet 17 (a lofted laminated sheet 18) of embodiments No. 8, 10 shown by the Figure 10 (b), there is only one piece of surface sheet 9, which is arranged on the upper side of main body 11 (two pieces of fiber mats 7).

Regarding the third stage sheet 15 (a consolidated laminated sheet 16) of embodiment No. 13 shown by the Figure 11 (a) and the fourth stage sheet 17 (a lofted laminated sheet 18) of embodiment No. 13 shown by the Figure 11 (b), one piece each of surface sheet 9 are arranged on the upper and bottom sides of main body 11 (three pieces of fiber mats 7a, 7b, 7a).

Regarding the third stage sheet 15 (a consolidated laminated sheet 16) of embodiment No. 14 shown by the Figure 12 (a) and the fourth stage sheet 17 (a lofted laminated sheet 18) of embodiment No. 14 shown by the Figure 12 (b), one piece each of surface sheet 9 are arranged on the upper and bottom sides of main body 11 (four pieces of fiber mats 7a, 7b, 7b, 7a).

The above embodiments have the following effects:
1. Regarding the laminated sheets 16, 18 and compacts 20, 22, because each of the gaps inside the main body 11 mainly composed of fiber mats 7, 7a, 7b mainly composed of a glass fiber and the surface sheets 9 of a nonwoven cloth are impregnated with thermoplastic resins, the strength of laminated sheets 16, 18 and compacts 20, 22 can be increased. Moreover, any surface sheets 9 put on the outer side of fiber mats 7, 7a, 7b of the main body 11 makes the appearance better and is pleasant to the touch. Furthermore, thermoplastic resin impregnated in the gap of fiber mats 7, 7a, 7b of the main body 11 and thermoplastic resin impregnated in the gap of any surface sheets 9 are linked to each other, therefore the adhesive strength of each surface sheet 9 against the outer side of fiber mats 7, 7a, 7b of the main body 11 can be increased and its nondetachability can be improved.
2. Regarding the laminated sheet 18, because thin films and fine holes are formed on each surface sheet 9 of nonwoven cloth impregnated with thermoplastic resin, particularly a low-frequency portion of incident sound decreases by energy conversion action generated when incident sound colliding with a surface sheet 9 generates vibration of a thin film or passes through fine holes. In addition, regarding laminated sheet 18, because a porous section appears on main body 11 comprising fiber mats 7, 7a, 7b impregnated with thermoplastic resin, particularly middle- and high-frequency portions of incident sound decrease by energy conversion action generated when incident sound passing through a surface sheet 9 passes through the porous section. Therefore, the sound absorbency of a laminated sheet 18 can be increased. By using such a laminated sheet 18, the sound absorbency of molded compacts 20, 22 can be also increased.
3. The tensile strength of consolidated laminated sheet 16 (the third stage sheet 15) is higher compared with that of a lofted laminated sheet 18 (the fourth stage sheet 17). Therefore, depending on the specific application, it is possible to have highly consolidated, low-porosity regions of higher tensile strength and unconsolidated or weakly consolidated, high-porosity regions of higher structural stiffness and good acoustic properties; these regions can be defined by the molding process, particularly by the geometry of the molding tools.

Except for the embodiments described above, further embodiments are possible. For example, the main body 11 can be composed of fiber mats 7, 7a, 7b, only, or it can be obtained by putting onto fiber mats 7, 7a, 7b at least one further mat whose quality is different therefrom.

### List of reference numerals

- 1: chopped reinforcing fiber supply
- 2: continuous reinforcing fiber supply
- 3: chopped type feeding device
- 4: continuous type feeding device
- 5: net conveyor
- 6: needling and punching apparatus
- 7, 7a, 7b: fiber mat
- 8, 8a, 8b, 8c: thermoplastic resin sheet
- 9: surface sheet
- 10: first stage sheet
- 11: main body
- 12: heating pressure zone
- 13: second stage sheet
- 14: cooling pressure zone
- 15: third stage sheet
- 16: laminated sheet (compressed, consolidated)
- 17: fourth stage sheet
- 18: laminated sheet (reexpanded, lofted)
- 19: fifth stage sheet
- 20: compact = molded part
- 21: sixth stage sheet
- 22: section of compact = molded part

## Claims

1. A method for producing a flexurally rigid consolidated laminated sheet, comprising the following steps:
a) providing a nonwoven fiber mat comprising reinforcing fibers;
b) subjecting said nonwoven fiber mat to a needling process (6), thereby obtaining a needled nonwoven fiber mat (7);
c) providing at least one thermoplastic resin sheet (8) and at least one surface sheet (9), said surface sheet being formed of a non-woven cloth comprising cloth fibers, and arranging said surface sheet and said resin sheet to be substantially co-planar to said needled non-woven fiber mat, thereby obtaining a multilayered sheet (10), with the provision that said thermoplastic resin has a first softening temperature T1 that is lower than both a second softening temperature T2 of said cloth fibers and a third softening temperature T3 of said reinforcing fibers;
d) subjecting said multilayered sheet to a heating and pressure treatment (12), thereby melting said thermoplastic resin sheet so as to form a fully impregnated laminated sheet (13);
e) subjecting said fully impregnated laminated sheet to a cooling and pressure treatment (14), thereby solidifying said melted thermoplastic resin, so as to form a consolidated laminated sheet (15, 16) with a porosity not exceeding 5% by volume.
wherein at least steps c) to e) are carried out as a continuous process.

2. The method according to claim 1, followed by the steps of:
f) providing a portion of said consolidated laminated sheet and heating the same to a temperature above said first softening temperature T1 but below said second softening temperature T2 and said third softening temperature T3, thereby melting thermoplastic resin contained in said laminated sheet portion, whereby a main body of said portion increases in thickness due to a springback action of reinforcing fibers contained therein, thereby forming a porous laminated sheet (17, 18);
g) subjecting said porous laminated sheet to a hot molding process, thereby forming a hot molded part;
h) allowing said hot molded part to cool down, thereby forming a flexurally rigid molded part (19, 20).

3. The method according to claim 2, wherein said hot molding process comprises forming at least one compacted region (15) with comparatively smaller thickness and at least one expanded region (17) with comparatively larger thickness.

4. The method according to one of claims 1 to 3, wherein said reinforcing fibers are selected from glass fibers and carbon fibers or a mixture thereof.

5. The method according to claim 1 or 4, wherein said cloth fibers of said surface sheet (9) are polyethylene terephthalate fibers and wherein said thermoplastic resin (8) is polypropylene.

6. A flexurally rigid molded part, obtained by the method of claim 2, comprising:
- a core layer (7) made of at least one needled nonwoven fiber material comprising reinforcing fibers;
- at least one surface layer (9) attached in substantially co-planar manner to one face of said core layer, said surface layer being formed of a non-woven cloth comprising cloth fibers;
- wherein gaps within and between said core layer and said surface layer are impregnated with a thermoplastic resin having a first softening temperature T1 that is lower than both a second softening temperature T2 of said cloth fibers and a third softening temperature T3 of said reinforcing fibers, whereby said surface layer is firmly attached to said core layer.
said molded part (20) having a reinforcing fiber content of 10 to 50% by weight.

7. The flexurally rigid molded part according to claim 6, comprising at least one compacted region (15) with comparatively smaller thickness and at least one expanded region (17) with comparatively larger thickness, said expanded region having a porosity of about 35 to about 65% by volume.

8. The molded part according to claim 6 or 7, wherein said reinforcing fibers are selected from glass fibers and carbon fibers or a mixture thereof.

9. The molded part according to one of claims 6 to 8, wherein said cloth fibers of said surface layer are polyethylene terephthalate fibers and wherein said thermoplastic resin is polypropylene.

10. The molded part according to one of claims 6 to 9, wherein at least one of said surface sheets is provided with a decorative print.

11. A flexurally rigid consolidated laminated sheet, obtained by the method of claim 1, comprising:
- a main body made of at least one needled nonwoven fiber mat (7, 7a, 7b) comprising reinforcing fibers;
- at least one surface sheet (9) attached in substantially co-planar manner to one face of said main body, said surface sheet being formed of a non-woven cloth comprising cloth fibers;
- wherein gaps within and between said main body and said surface sheet are impregnated with a thermoplastic resin (8) having a first softening temperature T1 that is lower than both a second softening temperature T2 of said cloth fibers and a third softening temperature T3 of said reinforcing fibers, whereby said surface sheet is firmly attached to said main body,
said laminated sheet having an area weight of 300 to 6'500 g/m², a reinforcing fiber content of 10 to 50% by weight and a porosity not exceeding 5% by volume.

12. The laminated sheet according to claim 11, wherein said laminated sheet has an area weight of 300 to 2'500 g/m², particularly of 500 to 1'800 g/m².

13. The laminated sheet according to claim 11 or 12, wherein said reinforcing fibers are selected from glass fibers and carbon fibers or a mixture thereof.

14. The laminated sheet according to one of claims 11 to 13, wherein said cloth fibers of said surface sheet are polyethylene terephthalate fibers and wherein said thermoplastic resin is polypropylene.

15. The laminated sheet according to one of claims 11 to 14, wherein at least one of said surface sheets is provided with a decorative print.

## Patentansprüche

1. Verfahren zur Herstellung einer biegesteifen konsolidierten mehrschichtigen Platte, umfassend die folgenden Schritte:
a) es wird eine Faservliesmatte bereitgestellt, welche Verstärkungsfasern umfasst;
b) die besagte Faservliesmatte wird einem Vernadelungsprozess (6) unterworfen, wodurch eine vernadelte Faservliesmatte (7) gewonnen wird;
c) es wird mindestens eine thermoplastische Harzbahn (8) und mindestens eine Oberflächenbahn (9) bereitgestellt, wobei die besagte Oberflächenbahn aus einem Vliesstoff gebildet ist, welcher Stofffasern umfasst, und die besagte Oberflächenbahn und die besagte Harzbahn werden derart angeordnet, dass sie im Wesentlichen koplanar zur besagten genadelten Faservliesmatte sind, wodurch sich eine mehrschichtige Bahn (10) ergibt, mit der Massgabe, dass das besagte thermoplastische Harz eine erste Erweichungstemperatur T1 aufweist, die niedriger ist sowohl als eine zweite Erweichungstemperatur T2 der besagten Stofffasern und als eine dritte Erweichungstemperatur T3 der besagten Verstärkungsfasern;
d) die besagte mehrschichtige Bahn wird einer Heiz- und Pressbehandlung (12) unterworfen, wodurch die besagte thermoplastischen Harzbahn aufgeschmolzen wird, sodass eine vollständig imprägnierte mehrschichtige Bahn (13) gebildet wird;
e) die vollständig imprägnierte mehrschichtige Bahn wird einer Kühl- und Pressbehandlung (14) unterworfen, wodurch das besagte geschmolzene thermoplastische Harz verfestigt wird, sodass eine konsolidierte mehrschichtige Bahn (15, 16) mit einer Porosität von nicht mehr als 5 Volumen-% gebildet wird,
wobei mindestens die Schritte c) bis e) als kontinuierliches Verfahren durchgeführt werden.

2. Verfahren nach Anspruch 1, gefolgt von den Schritten:
f) es wird ein Abschnitt der besagten konsolidierten mehrschichtigen Platte bereitgestellt und dieselbe wird auf eine Temperatur über der besagten ersten Erweichungstemperatur T1, aber unter der besagten zweiten Erweichungstemperatur T2 und der besagten dritten Erweichungstemperatur T3 aufgeheizt, wodurch das im besagten Abschnitt der mehrschichtigen Platte enthaltene thermoplastische Harz aufgeschmolzen wird, und wodurch die Dicke eines Hauptkörpers des besagten Abschnittes aufgrund einer Rückfederungswirkung der darin enthaltenen Verstärkungsfasern zunimmt, wodurch eine poröse mehrschichtige Platte (17, 18) gebildet wird;
g) die besagte mehrschichtige Platte wird einem Heissverformungsprozess unterzogen, wodurch ein heisses Formteil gebildet wird;
h) das besagte heisse Formteil wird abkühlen gelassen, wodurch ein biegesteifes Formteil (19, 20) gebildet wird.

3. Verfahren nach Anspruch 2, wobei der besagte Heissverformungsprozess die Bildung mindestens eines verdichteten Bereichs (15) mit einer vergleichsweise geringeren Dicke sowie mindestens eines expandierten Bereichs (17) mit einer vergleichsweise grösseren Dicke umfasst.

4. Verfahren nach einem der Ansprüche 1 bis 3, wobei die besagten Verstärkungsfasern ausgewählt sind aus Glasfasern und Kohlenstofffasern oder einer Mischung davon.

5. Verfahren nach Anspruch 1 oder 4, wobei die besagten Stofffasern der besagten Oberflächenbahn (9) Polyethylenterephthalatfasern sind und wobei das besagte thermoplastische Harz (8) Polypropylen ist.

6. Biegesteifes Formteil, erhalten mittels des Verfahrens nach Anspruch 2, umfassend:
- eine Kernschicht (7), hergestellt aus mindestens einem Verstärkungsfasern umfassenden vernadelten Faservliesmaterial;
- mindestens eine Oberflächenschicht (9), die in einer im Wesentlichen koplanaren Weise an einer Seite der besagten Kernschicht angebracht ist, wobei die besagte Oberflächenschicht aus einem Vliesstoff gebildet ist, welcher Stofffasern umfasst;
- wobei Lücken innerhalb und zwischen der besagten Kernschicht und der besagten Oberflächenschicht mit einem thermoplastischen Harz imprägniert sind, das eine erste Erweichungstemperatur T1 aufweist, die niedriger ist sowohl als eine zweite Erweichungstemperatur T2 der besagten Stofffasern wie auch als eine dritte Erweichungstemperatur T3 der besagten Verstärkungsfasern, wodurch die besagte Oberflächenschicht fest mit der besagten Kernschicht verbunden ist;
wobei das besagte Formteil (20) einen Verstärkungsfasergehalt von 10 bis 50 Gew.-% aufweist.

7. Biegesteifes Formteil nach Anspruch 6, umfassend mindestens einen verdichteten Bereich (15) mit einer vergleichsweise geringeren Dicke und mindestens einen expandierten Bereich (17) mit einer vergleichsweise grösseren Dicke, wobei der besagte expandierte Bereich eine Porosität von ungefähr 35 bis ungefähr 65 Vol.-% aufweist.

8. Formteil nach Anspruch 6 oder 7, wobei die besagten Verstärkungsfasern ausgewählt sind aus Glasfasern und Kohlenstofffasern oder einer Mischung davon.

9. Formteil nach einem der Ansprüche 6 bis 8, wobei die besagten Stofffasern der besagten Oberflächenschicht Polyethylenterephthalatfasern sind und wobei das besagte thermoplastische Harz Polypropylen ist.

10. Formteil nach einem der Ansprüche 6 bis 9, wobei mindestens eine der besagten Oberflächenbahnen mit einem dekorativen Aufdruck versehen ist.

11. Biegesteife konsolidierte mehrschichtige Platte, erhalten mittels des Verfahrens nach Anspruch 1, umfassend:
- einen Hauptkörper, der aus mindestens einer Verstärkungsfasern umfassenden vernadelten Faservliesmatte (7, 7a, 7b) hergestellt ist;
- mindestens eine Oberflächenbahn (9), die in einer im wesentlichen koplanaren Weise an einer Seite der besagten Hauptkörpers angebracht ist, wobei die besagte Oberflächenbahn aus einem Vliesstoff gebildet ist, welcher Stofffasern umfasst;
- wobei Lücken innerhalb und zwischen dem besagten Hauptkörper und der besagten Oberflächenbahn mit einem thermoplastischen Harz imprägniert sind, das eine erste Erweichungstemperatur T1 aufweist, die niedriger ist sowohl als eine zweite Erweichungstemperatur T2 der besagten Stofffasern wie auch als eine dritte Erweichungstemperatur T3 der besagten Verstärkungsfasern, wodurch die besagte Oberflächenbahn fest mit dem besagten Hauptkörper verbunden ist,
wobei die besagte mehrschichtige Platte ein Flächengewicht von 300 bis 6'500 g/m², einen Verstärkungsfasergehalt von 10 bis 50 Gew.-% und eine Porosität von nicht mehr als 5 Vol.-% aufweist.

12. Mehrschichtige Platte nach Anspruch 11, wobei die besagte mehrschichtige Platte ein Flächengewicht von 300 bis 2'500 g/m², insbesondere von 500 bis1'800 g/m² aufweist.

13. Mehrschichtige Platte nach Anspruch 11 oder 12, wobei die besagten Verstärkungsfasern ausgewählt sind aus Glasfasern und Kohlenstofffasern oder einer Mischung davon.

14. Mehrschichtige Platte nach einem der Ansprüche 11 bis 13, wobei die besagten Stofffasern der besagtem Oberflächenbahn Polyethylenterephthalatfasern sind und wobei das thermoplastische Harz Polypropylen ist.

15. Mehrschichtige Platte nach einem der Ansprüche 11 bis 14, wobei mindestens eine der besagten Oberflächenbahnen mit einem dekorativen Aufdruck versehen ist.

## Revendications

1. Procédé de fabrication d'une nappe stratifiée, rigide en flexion, comprenant les étapes suivantes consistant à :
a) fournir une couche de fibres non tissées comprenant des fibres de renforcement,
b) soumettre la couche de fibres non tissées à un procédé d'aiguilletage (6) pour obtenir une couche (7) de fibres non tissées, aiguilletées,
c) fournir au moins une nappe de résine thermoplastique (8) et au moins une nappe de surface (9), la nappe de surface étant formée d'un revêtement non tissé comportant des fibres de revêtement et organiser la nappe de surface et la nappe de résine pour être pratiquement coplanaires par rapport à la couche de fibres non tissées, aiguilletée, pour obtenir ainsi une nappe multicouches (10), la résine thermoplastique ayant une première température de ramollissement T1 inférieure à la fois à une seconde température de ramollissement T2 des fibres de revêtement et à une troisième température de ramollissement T3 des fibres de renforcement,
d) soumettre la nappe multicouche à un traitement thermique et de pression (12), de façon à faire fondre la nappe de résine thermoplastique et former une nappe stratifiée (13) complètement imprégnée,
e) soumettre la nappe stratifiée complètement imprégnée à un refroidissement et un traitement de pression (14) pour solidifier ainsi la résine thermoplastique fondue pour former une nappe stratifiée consolidée (15, 16) ayant une porosité ne dépassant pas 5% en volume,
au moins les étapes c)-e) étant exécutées selon un procédé continu.

2. Procédé selon la revendication 1, suivi par les étapes consistant à :
f) fournir une partie de la nappe stratifiée, consolidée, et chauffer celle-ci à une température supérieure à la première température de ramollissement T1 mais inférieure à la seconde température de ramollissement T2, et la troisième température de ramollissement T3, en faisant ainsi fondre la résine thermoplastique contenue dans la partie de nappe laminée, un corps principal de ladite partie augmentant l'épaisseur par l'élasticité de détente des fibres de renforcement qu'elle contient et formant ainsi une nappe stratifiée, poreuse (17, 18),
g) soumettre la nappe stratifiée, poreuse à un procédé de moulage à chaud pour former un objet moulé à chaud,
h) laisser refroidir l'objet moulé à chaud pour former une pièce moulée, rigide en flexion (19, 20).

3. Procédé selon la revendication 2,
selon lequel le procédé de moulage consiste à former au moins une région compactée (15) d'épaisseur comparativement plus faible et au moins une région expansée (17) ayant une épaisseur comparativement plus grande.

4. Procédé selon l'une des revendications 1 à 3,
selon lequel on choisit les fibres de renforcement parmi les fibres de verre et les fibres de carbone ou un mélange de celles-ci.

5. Procédé selon la revendication 1 ou 4,
dans lequel les fibres de revêtement de la nappe de surface (9) sont des fibres de polyéthylène téréphtalate et la résine thermoplastique (8) est du polypropylène.

6. Objet moulé rigide en flexion obtenu par le procédé de la revendication 2, et comprenant :
- une couche de cœur (7) en fibres non tissées, aiguilletées comprenant des fibres de renforcement,
- au moins une couche de surface (9) fixée de manière pratiquement coplanaire à une face de la couche de cœur, cette couche de surface étant formée d'un revêtement non tissé comprenant des fibres de revêtement,
- les intervalles dans et entre la couche de cœur et la couche de surface étant imprégnées avec une résine thermoplastique ayant une première température de ramollissement T1 inférieure à la fois à une seconde température de ramollissement T2 des fibres de revêtement et à une troisième température de ramollissement T3 des fibres de renforcement, la couche de surface étant fermement attachée à la couche de cœur,
l'objet moulé (20) ayant une teneur en fibres de renforcement comprise entre 10-50 % massique.

7. Pièce moulée rigide en flexion selon la revendication 6,
comprenant au moins une région compactée (15) ayant une épaisseur relativement plus faible et au moins une couche expansée (17) ayant une épaisseur relativement plus grande, la région expansée ayant une porosité de l'ordre de 35-65% en volume.

8. Pièce moulée selon la revendication 6 ou 7,
dans laquelle les fibres de renforcement sont choisies parmi les fibres de verre et les fibres de carbone ou un mélange de celles-ci.

9. Pièce moulée selon l'une des revendications 6 à 8,
selon laquelle les fibres de revêtement de la couche de surface sont des fibres de polyéthylène téréphtalate et la résine thermoplastique est du polypropylène.

10. Pièce selon l'une des revendications 6 à 9,
dans laquelle au moins l'une des nappes de surface comporte un décor imprimé.

11. Nappe stratifiée rigide en flexion obtenue par le procédé selon la revendication 1, et comprenant :
- un corps principal réalisé en au moins une couche de fibres non tissées aiguilletée (7, 7a, 7b) comprenant des fibres de renforcement,
- au moins une couche de surface (9) fixée d'une manière pratiquement coplanaire à une face du corps principal, cette couche de surface étant formée d'un revêtement non tissé comprenant des fibres de revêtement,
- des intervalles dans et entre le corps principal et le revêtement de surface étant imprégnés avec une résine thermoplastique (8) ayant une première température de ramollissement T1 inférieure à la fois à une seconde température de ramollissement T2 des fibres de revêtement et à une troisième température de ramollissement T3 des fibres de renforcement, le revêtement de surface étant fixé fermement au corps principal,
la couche stratifiée ayant un poids surfacique compris entre 300-6500 g/m², une teneur en fibres de renforcement de 10-50 % massique et une porosité ne dépassant pas 5% en volume.

12. Nappe stratifiée selon la revendication 11,
dans laquelle la couche laminée a un poids surfacique de 300-2500 g/m², et en particulier compris entre 500 et 1800 g/m².

13. Nappe stratifiée selon la revendication 11 ou 12,
dans laquelle les fibres de renforcement sont choisies parmi les fibres de verre et les fibres de carbone ou un mélange de celles-ci.

14. Nappe stratifiée selon l'une des revendications 11 à 13,
dans laquelle les fibres de revêtement de la couche de surface sont des fibres de polyéthylène téréphtalate et la résine thermoplastique est du polypropylène.

15. Nappe stratifiée selon l'une des revendications 11 à 14,
dans laquelle au moins l'une des couches de surface a un décor imprimé.
